# EUROPEAN PATENT APPLICATION

(11) **EP 0 819 956 A2**
(43) Date of publication of application: **21.01.1998**
(21) Application number: 97202655.3
(22) Date of filing: 05.02.1993
(51) Int. Cl.: G02B 6/122, G02B 6/132, G02B 6/125

(54) **Silica waveguide structure**

(30) Priority: 05.02.1992 GB 9202463
(62) Divisional of application: 93903247.0
(71) Applicant: BRITISH TELECOMMUNICATIONS public limited company, London EC1A 7AJ (GB)
(72) Inventor: Maxwell, Graeme Douglas, Ipswich, Suffolk IP10 0AN (GB); Barbarossa, Giovanni, 70121 Bari (IT)
(74) Representative: Leng, Francis Edward

(57) **Abstract**

A three-dimensional waveguide has path regions (12.1, 12.2) which share a common confining region (11, 13.1, 13.2) uniform refractive index. The path regions are located at two or more levels. The structure is implemented in silica with distributed dopants to distinguish path regions from the confining region. The structure is made using flame hydrolysis to deposit layers. Melting point depressants are incorporated so that later deposited layer can be melted without melting the whole structure. Some layers of pure silica can be deposited by chemical vapour deposition. These layers are never melted and they provide a stabilising skeleton wen complicated structures are melted.

## Description

This invention relates to waveguides in which a substrate provides the mechanical support for the functional structure. As is conventional, the functional structure comprises path regions having a higher refractive index enclosed in a confining region having a lower refractive index.

In many implementations of waveguides of the type described above, the characteristic functional pattern of the path regions can be fully described in two dimensions. In one configuration, the waveguide takes the form of ribs of path material which project from a substrate having a planar surface and this configuration is sometimes called a "rib waveguide". Air is capable of acting as the confining region for silica (or doped silica) ribs and, therefore, functional structures are achieved if the ribs are left exposed. However, it is more usual to cover these ribs with a material of lower refractive index, because covering reduces transmission loss and it also protects the ribs, e.g. against mechanical damage and against contamination. Where the path region is covered the structure is often known as a "channel waveguide".

Waveguides as described above are used to provide a variety of functions, e.g. couplers, splitters, ring resonators and as other optical signal processing elements.

It has been proposed that channel waveguides be implemented in silica, and silica is also used to make waveguides in the form of fibre. In fibre technology dopants such as GeO₂, TiO₂ and B₂O₅ are used to increase the refractive index of the core (which constitutes the path region of a fibre). It is also known to use dopants such as boron and fluorine to decrease the refractive index of the cladding (which constitutes the confining region of a fibre). These dopants provide the optical function of the fibre waveguide, but it is also known to use dopants such as boron, phosphorous and fluorine to reduce the melting point of silica, in order to facilitate processing. The dopants used to reduce the melting point may affect the refractive index and this must be taken into account when selecting the concentration of the dopant used to adjust refractive index. Boron tends to reduce the refractive index whereas phosphorous increases the refractive index of the silica, but they both reduce the melting point. Therefore a balanced mixture provides a melting point depressant which has little or no effect upon the refractive index. Dopants are also used to support lasing, e.g. rare earths such as Nd and Er.

Japanese patent specification 57000604 (Nippon Denshin Denwa) describes a waveguide which has high degrees of integration by forming one plane of waveguides on the surface of another plane of waveguides. Each plane is produced by etching grooves on a smooth-surface glass substrate and filling the groove with fine glass particles for forming cores. The particle are vitrified to form transparent glass and excess material is etched off. Several planes are deposited on top of one another. (Japanese patent specification 57000604 is reported in the patent abstract of Japan Volume 6, No. 59 [P-110] [937] 16th April 1992).

US patent specification 3785717 describes a multi-layer structure of integrated optical waveguides. Each waveguide is produced by the diffusion of a doping agent into a layer into which it is integrated.

IEEE Photonics Technology Letters Volume 3 No.1 January 1991 at pages 22-24 describe a vertically integrated waveguide in silicon. Specifically, it describes a structure comprising layers of SiO₂ - Si - SiO₂ - Si - SiO₂ - Si.

This invention relates to waveguide structures which make possible more complicated configurations of path regions and more complicated devices than are available in conventional planar waveguides implemented in silica. It also facilitates the production of high packing densities of independent devices.

The invention is defined in the claims.

According to this invention, a waveguide has a three-dimensional structure, wherein a plurality of path regions are located at two or more different levels, said path regions sharing a common confining region, which has a uniform refractive index which is lower than that of the path regions. Preferably, all of the path regions have the same refractive index. The three-dimensional waveguide structure is implemented in silica or doped silica, wherein the distribution of the dopants causes the difference in refractive index.

The three-dimensional structures may be regarded as a plurality of waveguide units, juxtaposed as in a stack (non-waveguide units may also be included.) If desired, path regions in one unit can be functionally coupled to path regions in an adjacent unit, e.g. to form couplers or splitters.

The confining region may contain dopants, e.g. B and/or F, to reduce the refractive index. Preferably, the path regions contain dopants, e.g. GeO₂, TiO₂ or P₂O₅, to increase the refractive index. Path regions may also contain dopants to support lasing, e.g. rare earths such as Er and Nd. As mentioned above, these additives are used for similar purposes in silica fibre waveguides.

We will now describe a method for manufacturing channel waveguides from (doped) silica. The method is also applicable to the manufacture of three-dimensional structures, e.g. stacks.

As applied to a single waveguide unit having path regions of higher refractive index and a confining region of lower refractive index, the method comprises:
(a) producing by flame hydrolysis a thick porous layer of silica or doped silica;
(b) melting the porous layer produced in (a) to produce a thinner consolidated layer, the temperature being selected so that the surface is at least partially controlled by surface tension whereby a uniform surface is produced;
(c) selectively removing unwanted consolidated material to leave behind the desired path regions;
(d) depositing a layer of silica or doped silica having a lower refractive index, said material being deposited in the form of a thick porous layer by flame-hydrolysis; and
(e) melting the porous layer produced in (d) to produce a thinner consolidated layer, the temperature being selected so that the surface is at least partially controlled by surface tension, whereby a uniform surface is produced:
wherein at least one later deposited region is melted without melting an earlier deposited said melted region having a greater concentration of melting point depressant than said other region.

A three-dimensional structure comprising a plurality of waveguide units in accordance with the invention can be produced by repeating steps (a) - (e) once for each unit whereby a stack of units is built up one by one.

There is a problem in that, during steps (b) and (e), a previously deposited region, e.g. a path region produced in step (c), could melt and hence the configuration could be unacceptably degraded. This danger becomes worse as more and more units are juxtaposed to form a stack.

Two alternative techniques for reducing this danger will now be mentioned.

According to the first technique, melting point depressants are included in at least some of the layers deposited by flame-hydrolysis such that later deposited layers contain higher concentrations of the melting point depressants than earlier deposited layers. This means that the later deposited layers have lower melting points than the earlier deposited layers and, in consequence, the earlier deposited layers remain in the solid phase during the consolidation of the later layers. It will be apparent that this technique can be used to preserve the structure of path regions but it becomes impractical if a large numbers of units e.g. more than two units, need to be deposited.

According to the second alternative, thin layers of silica are deposited by methods which do not require melting for consolidation. Chemical vapour deposition, which may be plasma-enhanced, is an example of such a technique. Because the thin layers do not need to be melted they are composed of the highest melting point material, e.g. silica, in the structure. They therefore remain rigid when subsequent layers produced by flame-hydrolysis are consolidated by melting. The rigid layers, distributed throughout the structure, act rather like a skeleton to preserve the structure. The high melting layers are preferably deposited between steps (c) and (d) as specified above. By this technique the path regions are protected. Extra protection can be achieved by also depositing a high melting point layer immediately before step (a). Thus a path region may be enclosed in high melting material.

It is now appropriate to comment upon the technical significance of these methods.

It is desired to produce a stack wherein each unit, when complete, has a flat surface. However, the earlier part of the process as described in steps (a) - (c) above, produces path regions in the form of ribs which project from the pre-existing flat surface. Thus, the production of the path regions necessarily produces an irregular surface in that it must comprise ribs which project from a flat surface. The later part of the process, described in steps (d) and (e), removes these irregularities and flame-hydrolysis is particularly well adapted for this purpose because, during consolidation, the porous material is melted and surface tension plays an important part in controlling the shape of the surface. The surface tension tends to produce a flat surface and, therefore, the consolidated layer will have a flat surface even when it is deposited over ribs. Thus flame-hydrolysis produces the desired result but, as mentioned above, there is the difficulty that previously deposited regions may melt during consolidation and thereby degrade the structure.

Other processes, e.g. chemical vapour deposition and plasma-enhanced chemical vapour deposition, deposit a consolidated layer at low temperature. Thus the workpiece is not heated to its melting point during said deposition whereby the problems associated with melting are avoided. However, the avoidance of melting makes it difficult to remove irregularities (as mentioned in the previous paragraph). Hence processes which avoid melting have difficulty in making the desired flat surfaces. This invention includes the use of flame-hydrolysis after low temperature deposition. The flame-hydrolysis provides the uniform surface as described above but some of the structure must be melted. However the layers produced by the low temperature deposition processes remain solid and provide a rigid skeleton which helps to retain the structure when the porous material is melted in order to consolidate it.

It is also possible and desirable to combine the two techniques. Thus increasing the concentration of melting point depressants in the layers produced by flame-hydrolysis can help to keep some of the structure in the solid phase which assists the rigid layers in maintaining the structure. (It will be appreciated that the layers produced at low temperature are never melted and, therefore, it is unnecessary and indeed undesirable to incorporate melting point depressants in such layers.)

The invention will now be described by way of example, with reference to the accompanying drawings in which:-
Figure 1 is a diagrammatic vertical cross-section through a three-dimensional waveguide structure, prepared by the first modification;
Figure 2 is a similar vertical cross-section through a three-dimensional waveguide structure prepared by the second modification;
Figure 3 illustrates a configuration offering maximum protection to the path regions during processing;
Figure 4 is a plan view of a single waveguide unit adapted to split one input into eight outputs; and
Figure 5 illustrates two separate units which co-operate the function as a double ring-resonator.

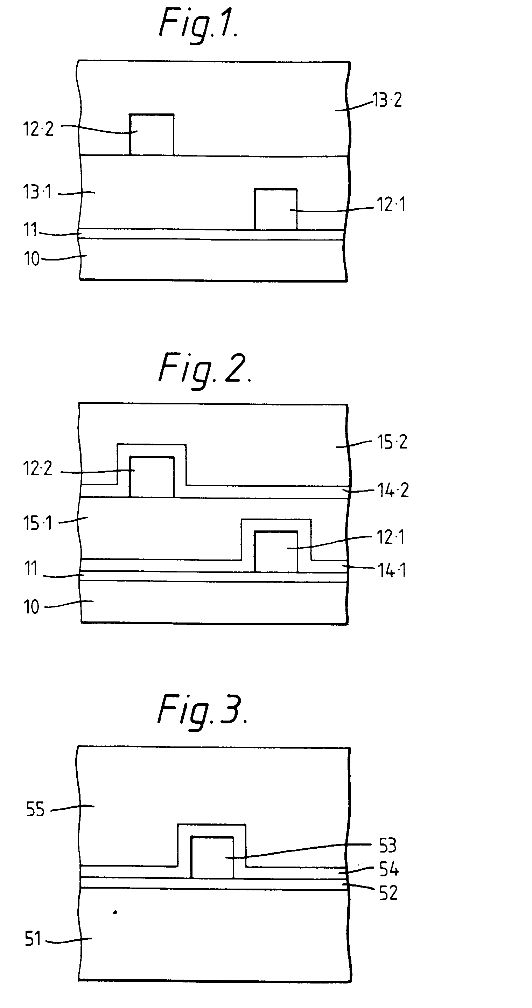

Figure 1 illustrates a three-dimensional waveguide structure which is mechanically supported on a silicon substrate 10, the surface of which was oxidised to provide a thin silica buffer layer 11. The waveguide structure comprises a path region 12.1 which is supported directly on the buffer layer 1 1 and is surrounded by a silica confining region 13.1. The path region 12.1 and the confining region 13.1 constitute the first layer of the three-dimensional structure.

The second layer of the structure is constituted by path region 12.2 which is supported on confining region 13.1 and surrounded by confining region 13.2. Although Figure 1 only illustrates two layers it will be appreciated that the structure could be continued into further layers.

As will be explained in greater detail below, the structure illustrated in Figure 1 was made in the following sequence. The starting point was a substrate consisting only of silicon 10 and buffer layer 11. The various layers were deposited onto the substrate in the following sequence, namely: path region 12.1, confining region 13.1, path region 12.2 and confining region 13.2. Each region contained a higher concentration of a melting point depressant than its predecessor. Thus, when each region is melted for consolidation, the existing layers remain solid, and hence the configuration is preserved.

In an alternative configuration, not illustrated in any drawing, an extra layer of confining material is located between buffer layer 1 1 and path region 12.1. This extra layer of confining material is deposited first by flame hydrolysis. Conveniently, no melting point depressant is used in this layer.

Figure 2 illustrates a modification of Figure 1 in which each of the confining regions 13.1 and 13.2 is divided into first confining regions 14.1 and 14.2 and second confining regions 15.1 and 15.2. First regions 14.1 and 14.2 are formed of pure silica because pure silica has a higher melting point than the other regions (which contain melting point depressants). First region 14.1 is adjacent to path region 12.1 and first region 14.2 is adjacent to path region 12.2. Second confining regions 13.1 and 13.2 are as described in Figure 1.

The regions illustrated in Figure 2 were deposited in the sequence, namely:-

Path region 12.1, primary confining region 14.1, secondary confining region 15.1, path region 12.2, primary confining region 14.2 and secondary confining region 15.2. The primary confining regions 14.1 and 14.2 were deposited by chemical vapour deposition, preferably by plasma-enhanced chemical vapour deposition. They contain no melting point depressants so they are the highest melting regions in the whole structure. All the other regions were deposited by flame hydrolysis followed by melting for consolidation. In this respect the other regions are the same as in Figure 1.

Primary confining regions 14.1 and 14.2 were deposited by chemical vapour deposition and this process not only deposits consolidated silica, but it does so at low temperature. Thus primary confining regions 14.1 and 14.2 are not melted as part of their production, and they are never melted during the preparation of the whole device. The structure illustrated in Figure 2 permits melting of previously deposited path regions and confining regions because the primary confining regions remain as a solid skeleton to preserve the structure. It is still necessary to use melting point depressants in the layers deposited by flame hydrolysis in order to provide lower melting points than the pure silica. The use of pure silica layers facilitates the building up of structures with a large number of layers, because the use of melting point depressants, as the only technique, becomes difficult when it is necessary to provide a large number of regions, each having a different melting point.

Figure 3 illustrates a configuration which conserves the shape of a path region 53 and reduces diffusion into adjacent regions. The configuration is sometimes desirable in complicated structures where repeated re-melting gives rise to a substantial risk that the configuration will become degraded.

Figure 3 illustrates a low melting confining region 51, which was produced by flame hydrolysis. This region is covered with a thin layer 52 of pure silica which was produced by chemical vapour deposition. This implies that layer 52 was not melted during its production, and is never melted during the production of the whole device: The path region 53 is located directly on thin layer 52. During the course of its production, path region 53 was deposited by flame hydrolysis as a uniform layer which was consolidated by melting. During the melting stage thin layer 52 remained solid so reducing the possibility of diffusion of path region material into confining region 51.

After shaping, path region 53 was covered by a thin layer 54 of pure silica which was also produced by chemical vapour deposition. Thin layer 54 resembles thin layer 52 in that neither layer is ever melted. However, thin layer 52 does not produce the uniform surface which is desirable, and this is achieved by depositing a further layer 55 which consists of low melting silica produced by flame hydrolysis. When layer 55 was melted for consolidation, path region 53 and confining region 51 also melted. However, thin layers 52 and 54 remained in the solid phase. Thus the cross-section of path region 53 was preserved because the path region was surrounded by a solid skeleton. Furthermore, the risk of molten layers 51, 53 or 55 diffusing into one another was reduced by the same solid layers 52 and 54.

It will be apparent that the structure illustrated in Figure 3 provides thorough protection when complicated structures are to be produced. However, in most circumstances, it is possible to simplify the production schedule by omitting thin layer 52 without serious risk of damage.

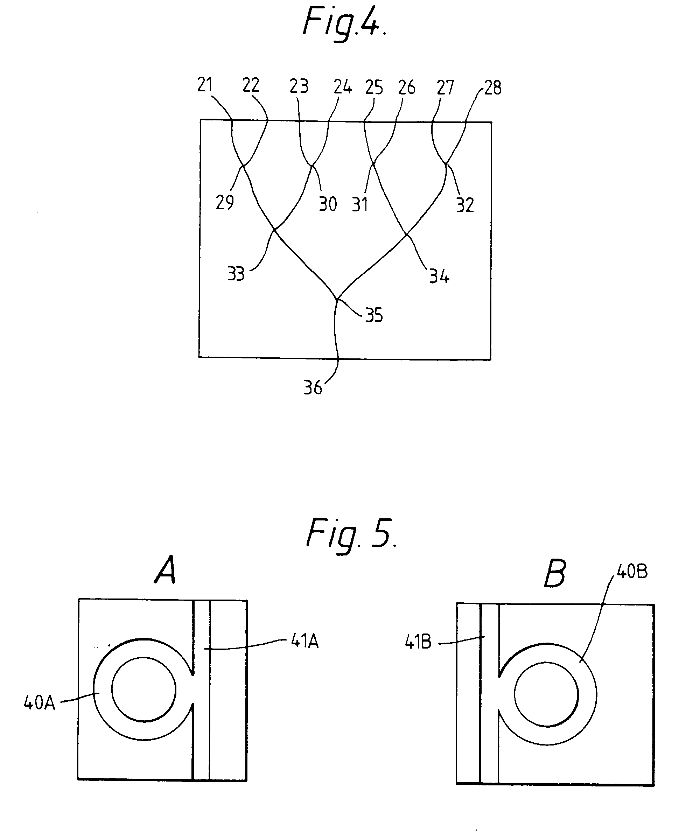

Figure 4 is a plan view of a connector which would be suitable for a single unit of a multi-unit structure according to the invention. The connector has eight output ports 21 - 28 which provide connection to eight different external fibres. As can be seen in Figure 4, the eight ports 21 - 28 are connected in pairs to four primary nodes 29 - 32. In turn, the four primary nodes are connected to secondary nodes 33 and 34 which are also linked to a final node 35 which is connected to a single input port 36. The pattern illustrated in Figure 4 is suitable for use as a splitter. For example, a laser connected to port 36 would be equivalent to eight lasers located at ports 21 - 28.

It will be appreciated that the configuration illustrated in Figure 4 could be provided as a single unit of a device wherein the other units have different structures. It is emphasised that structures of the individual units are independent of one another.

Figure 5 illustrates a double ring resonator which involves the interaction of signals in two different layers of the three-dimensional device. Figure 5 comprises two separate Figures, identified as "A" and "B" to illustrate the two parts which interact. The complete functional unit comprises circular path regions 40A and 40B which interact when they are superimposed in the complete structure. Circular region 40A is associated with a linear path region 41A whereas circular path region 40B is similarly associated with a linear path region 41B.

The structures according to the invention, e.g. the structures illustrated in Figures 1 - 3, are conveniently prepared by depositing a sequence of units each of which comprises a plurality, e.g. two or three layers. Some or all of the layers are deposited by flame hydrolysis. Some layers, e.g. path regions, are shaped, e.g. by photolithography and etching before subsequent layers are deposited. Structures having several units and many layers can be built up, but it is important that previously deposited layers are not damaged during the deposition of subsequent layers.

Flame-hydrolysis is used to deposit at least some of the layers. Flame-hydrolysis is carried out at high temperature in a oxygen/hydrogen flame, which provides the water for the hydrolysis part of the reaction. Reagents are introduced into the flame in order to produce the desired layers. Thus SiCl₄ is introduced to the flame, to produce SiO₂ which is an important constituent of all the layers. In order to increase the refractive index of the SiO₂ it is necessary to introduce ancillary reagents into the flame, and three important ancillary reagents are GeCl₄ which produces GeO₂, TiCl₄ which produces TiO₂ and PCl₃ or POCl₃ which are converted to P₂O₅. All of these ancillary reagents increase the refractive index of the silica to produce path regions.

In addition to the reagents used to vary the refractive index, the invention utilises other reagents to reduce the melting point of the deposited layer. For example, introducing BCl₃ and/or PCl₃ into the flame dopes the SiO₂ (and any additives used to adjust the refractive index) with B₂O₃ and/or P₂O₅, careful selection of the correct ratio will avoid unwanted modifications of the refractive index. Reagents to introduce lasing additive may also be used.

The reactions which occur in the flame-hydrolysis process produce, in the first instance, a product which is in the form of very small particles, and for this reason the product is often known as "soot". It is emphasised that flame-hydrolysis produces a very thick layer of material having a low bulk density and this material must be consolidated by melting it.

After the deposition of a path region, e.g. a region containing GeO₂, the consolidated region is etched to give a desired configuration, e.g. configurations as illustrated in Figures 3 and 4. This etching is achieved by conventional photolithography followed by etching, e.g. reactive ion etching.

Flame-hydrolysis is a highly desirable technique for producing multi-layer structures because the deposition of thick layers followed by melting is capable of giving uniform or flat surfaces. Part of the explanation is that the molten material is controlled by surface tension, and surface tension produces a flat surface. From Figures 1 and 2 it will be apparent that, when the confining region is deposited the surface is uneven because the path regions 12.1 or 12.2 project from the surface as ribs. Flame hydrolysis is adapted to produce a flat uniform surface over a ribbed substrate.

A brief description of the preferred method of making the primary confining regions will now be given. These are shown as 14.1 and 14.2 in Figure 2 and as 52 and 54 in Figure 3. The method comprises reacting SiH₄ with NO at a pressure of 2 torr. The gas phase, which is cool, impinges on a substrate heated to about 400°C and a high-frequency field, e.g. 650 kHz, is applied across substrate. The field produces a plasma which causes the NO to dissociate into atomic oxygen which, on the surface of the substrate, reacts with SiH₄ to produce SiO₂ as a consolidated solid. The technique is not as good as flame hydrolysis to produce a flat surface over a shaped substrate, but it has the advantage of giving consolidated SiO₂ at low temperature without melting the other layers. Similar processes are also available which do not use the plasma. For example SiH₄ may be reacted with oxygen.

## Claims

1. A three-dimensional waveguide structure which has a plurality of path regions (12.1, 12.2) located at two or more different levels, said path regions 12.1, 12.2) sharing a common confining region (13.1, 13.2), wherein each region of said structure is implemented in silica or doped silica at least one region being implemented in doped silica and the distribution of the dopants distinguishes the path regions (12.1, 12.2) from the confining region, characterised in that there is a common confining region for all of the path regions (12.1, 12.2) and said common confinement region has a uniform refractive index which is lower then the refractive index of the path region (12.1, 12.2) having the lowest refractive index.

2. A waveguide structure according to either Claim 1 wherein each of the path regions (12.2, 12.2) contains a dopant to increase the refractive index.

3. A waveguide structure according to Claim 2, wherein the dopant is selected from GeO₂, TiO₂ and P₂O₅.

4. A waveguide structure according to any one of the preceding claims, wherein at least a portion of the structure, said portion including some or all of the confining region, contains a melting point depressant.

5. A waveguide structure according to Claim 4, wherein said melting point depressant is constituted by a combination of two different additives in relative proportions such that the combination has little or no effect upon the refractive index.

6. A waveguide structure according to Claim 5, wherein one additive is B₂O₃ and the other is P₂O₅.

7. A waveguide structure according to any one of claims 4, 5 or 6, wherein the confining region includes at least one region free from melting points depressants, said region being adjacent to at least one path region.

8. A waveguide structure according to Claim 7, wherein every path region (12.1, 12.2) is adjacent to at least one undoped region.
